Europäisches Patentamt

(19) European Patent Office

Office européen des brevets

(11) Publication number: **0 300 978**
**A1**

# EUROPEAN PATENT APPLICATION

(21) Application number: **88830230.4**

(22) Date of filing: **20.05.88**

(51) Int. Cl.⁴: **B 65 B 55/02**
**A 23 L 3/22**

(30) Priority: **22.06.87 IT 2099287**

(43) Date of publication of application:
**25.01.89 Bulletin 89/04**

(84) Designated Contracting States:
**AT BE CH DE ES FR GB GR LI LU NL SE**

(71) Applicant: **BARILLA G.E.R. FRATELLI- Società per Azioni**
**Viale Riccardo Barilla, 3/A**
**I-43100 Parma (IT)**

(72) Inventor: **Guarneri, Roberto**
**Via Orazio, 40**
**I-43100 Parma (IT)**

(74) Representative: **Vannini, Torquato et al**
**JACOBACCI-CASETTA & PERANI S.p.A. 7 Via Visconti di Modrone**
**I-20122 Milan (IT)**

(54) **A method for producing industrially sauces packaged in sealed containers, ready for consumption.**

(57) A method for producing, on an industrial scale, ready-for-consumption sauces packaged in sealed containers, includes a step of heat sterilizing the sauce as reduced to a thin layer, and cold packaging in a sterile environment the sauce inside containers closed tight by closure caps, after both the containers and the caps have been sterilized preliminarly and separately.

Fig-1

EP 0 300 978 A1

**Description**

This invention relates to a method for producing, on an industrial scale sauces ready for consumption, packaged in sealed containers and being of the so-called long-term preservation type.

Currently available sauces, ready for consumption, usually comprise either a single fluid component or a fluid component and a solid one in the form of chopped clams, beef, vegetables, etc.

In the industrial preparation of ready-for-consumption sauces, a first basic requirements is that the packaged sauce non-toxicity and preservability over time be ensured.

A second, no less important requirement regards retention of the physical and organoleptic properties, as well as the nutritive power, of the starting ingredients, since it is such features that form the discriminating criterion in assessing the quality of the sauces and, hence, their merchantability. In fact, the taste, color, and flavor of a pre-packaged sauce should approach as far as possible those of a similar home-made sauce.

Of these requirements, the former is, in this specific instance, inescapable also on account of the strict lawful provisions concerning non-toxicity of food products. In particular, to ensure non-toxicity, any contamination of the sauce by microorganisms must be avoided.

To meet this requirement, it has been common practice to provide for heat sterilization of the packaging containers after filling and sealing them.

The sterilization process is carried out in an autoclave so as to reach, at the thermal center of the container, a temperature of about 120°C, as adequate to ensure elimination of those microorganisms on which deterioration of the sauce product may depend.

Since that sterilization temperature should be attained at the container core, it occurs that the whole mass of the sauce lying between this thermal center and the container outer walls is subjected to progressively increasing temperatures and processing times toward the container periphery.

In addition, since heat cannot be transferred instantly, the overall heat sterilization treatment process in an autoclave may have to be protracted for one hour or more, depending on the container size.

Consequently, additionally to being time-consuming, that procedure results in the sauce becoming "over-cooked", that is in its organoleptic qualities and nutritive properties undergoing significant alterations, which reflects adversely on the sauce taste, flavor (characteristically singed), and color (darkened).

Therefore, despite the starting ingredients being of good quality, the resulting ready-for-consumption sauce is far from duplicating what is commonly intended by a "home-made" sauce.

Such downgrading thermal phenomena, moreover, acquire growing significance as the container size increases, because to ensure thorough sterilization of the containers, both the maximum temperature outside them and the residence time in the autoclave must be increased.

The net result is that, in order to keep the extent of such downgrading phenomena low using said heat sterilization in an autoclave, the container size must be reduced drastically.

The problem underlying this invention is to provide a method for preparing, on an industrial scale, ready-for-consumption sauces packaged in sealed containers, which can ensure non-toxicity and long-term preservability of the sauce, while retaining its physical and organoleptic properties along with the nutritive power of the starting ingredients.

This problem is solved, according to the invention, by a method which includes the step of providing a pumpable sauce from pre-selected ingredients, and is characterized in that it comprises the steps of:

supplying a continuous stream of said sauce as a thin layer to a heat treatment station;

heat sterilizing said sauce through said station;

cooling the thus sterilized sauce and successively transporting it to an aseptic packaging station;

supplying said packaging station with a plurality of pre-sterilized containers and, independently of said containers, with a like plurality of closure caps, also in a sterilized condition; and

cold packaging and sealing the sauce inside the containers through said aseptic packaging station.

The method of this invention advantageously allows the sauce to be maintained at the sterilization temperature for very short time periods (on the order of 4 minutes), while drastically reducing the distance of its thermal center from the heating fluid and minimizing, as a result, those thermal downgrading phenomena which are responsible for the loss of the starting ingredient physical and organoleptic properties. In fact, the distance separating the thermal center from the heating fluid varies from a minimum value of 30 mm (in the instance of smallest sier containers being sterilized in the autoclave) to a value in the 4 to 10 mm range, where the sauce being sterilized is a thin layer as provided by the method according to the invention. Furthermore, since sauce sterilization takes place in this method independently of the containers and closure caps, the size limitation imposed by heat sterilization within an autoclave can be obviated, to favor an advantageous increase in the daily output of end products.

Further features and the advantages of the method according to the invention will be more clearly understood from the following detailed description of a preferred, though not exclusive, embodiment thereof, to be taken by way of illustration and not of limitation in conjunction with the accompanying drawings, where:

Figure 1 is a diagram of the method according to the invention;

Figure 2 shows in perspective a tube of the heat treatment station, cutaway crosswise; and

Figure 3 is a plan view of a cross-section through a tube of the heat treatment station.

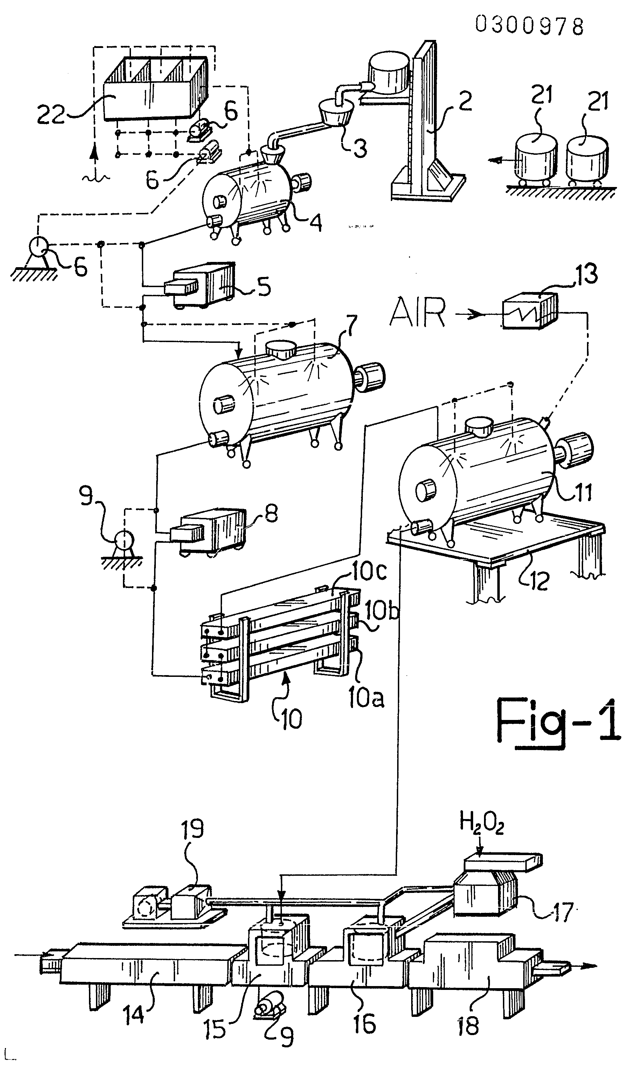

With reference to the diagram shown in Figure 1, the pre-cooked sauce ingredients are placed in wheel-mounted containers 21 which are raised by an elevator 2. Via a manifold 3, the contents of said dollies 21 is passed into a mixing and pre-heating tank 4 in order to provide a homogeneous sauce. Using a reciprocating piston pump 5 of large diameter, said sauce is pumped into a tank 7, serving as a plenum chamber, wherein it is further heated and mixed. A reciprocating piston pump 8, similar to the former pump 5, supplies the sauce to a heat treatment station 10 in a thin layer. In a preferred embodiment of the invention, the thin layer formation is enabled by a concentrical tube nest arrangement of said station 10. To this aim, the latter is provided with three concentrical tube sections, namely a heating section 10a, a residing section 10b, and a cooling section 10c. In said heating section, temperature can be raised up to 150°C, and in the residing section 10b, the sauce is kept at a sterilization temperature of approximately 115-121°C for a time period in the 2 to 4 minutes range; finally, in the cooling section, the sauce is lowered, prior to its exiting the station 10, down to a value of about 33-35°C.

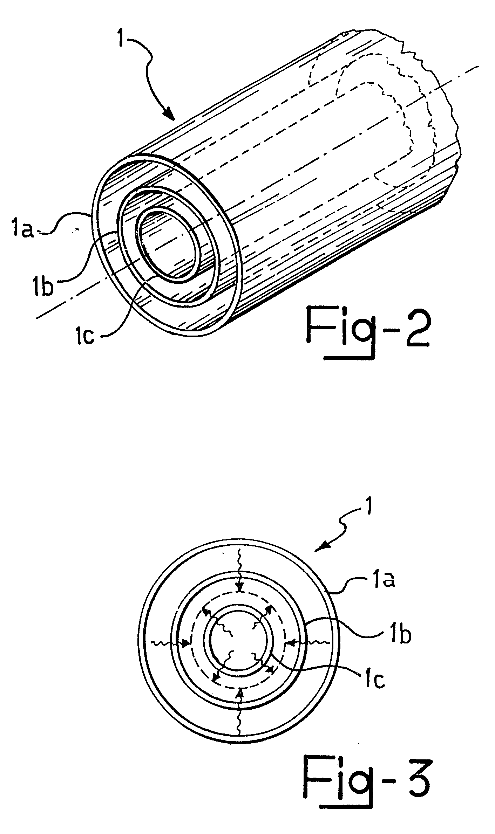

The constructional and operational features of the heat treatment station 10 may be best appreciated from Figures 2 and 3.

With reference to Figure 2, the numeral 1 designates a tube, shown cutaway transversely and in perspective, being a part of the station 10. Said tube 1 comprises three concentrical tubes, respectively designated 1a, 1b, and 1c. The sauce, as either being heated, or maintained at the sterilization temperature, or cooled, will flow through the annulus formed between the tubes 1b and 1c which, in a preferred embodiment thereof, has a thickness dimension varying between 8 and 20 mm. A heating or cooling fluid is instead circulated through the tube 1c interior and the annulus included between the tubes 1a and 1b. The cross-sectional view of said tube 1 shown in Figure 3, illustrates instead the heat path such as it occurs during the heating and sterilizing steps, from the heating fluid (e.g. overheated water) to the heated fluid (sauce).

The sauce exiting the station 10 is passed into a tank 11, maintained in an aseptic condition by blowing in sterile air, as generated by a system 13. The tank 11 is installed on a platform 12 whence the sauce flows down by gravity to a packaging station comprising, for example, a filler 15 and cap applicator 16, both in a sterile condition. The containers, such as small glass jars, are filled through said filler 15 and then sealed with closure caps through the cap applicator 16. In a preferred embodiment of the invention, the caps 16 comprise a metal disk as their top closure and a threaded screw-on portion of a plastics material provided with a pilfer-proofing ring safeguarding against unauthorized tampering. Both the containers and their closure caps are preliminarly sterilized using, for example, overheated steam in a sterilization tunnel 14 and hot hydrogen peroxide in a feeder 17, respectively. The containers, once filled and sealed, are washed and dried in a wash tunnel 18. The aseptic condition of said packaging station is ensured by producing a slight overpressure of sterile air from a system 19. The method also provides for the presence equipment flushing tanks and their related pumps, 6 and 9. All of the method steps are monitored and controlled from an electric control console, quite conventional in design and not shown, which can be interfaced to a computer.

The method according to the invention affords the following advantages:

heat transfer within the heat treatment station 10 between the heating fluid (e.g. overheated water) and the sauce takes place rapidly because of the system geometry (concentrical tube nest arrangement) and of the sauce being made to flow in a "thin layer" through an annulus (1b-1c); both factors enabling, in fact, maximum exposure of the product to the heat exchange process;

the sauce-downgrading thermal phenomena can be further attenuated by that the residing section 10b, wherein the sauce is kept albeit for a very short time, is immediately followed by the cooling section 10c, effective to quickly return it to a low temperature;

the tubes of the station 10 wherein the heat exchange process occurs, have an inside cross-sectional area and are designed to preserve the sauce physical integrity, especially in the respect of any meat, vegetables, clams, etc. present in it

the sauce pumping system, using large-diameter piston reciprocating pumps, 5 and 8, will leave the structure, consistency, and size unaltered of such coarse lumps (e.g. of vegetables, meat, etc.) as may included to form the structured component of the sauce, while preventing that structured component from becoming in any way emulsified with the fluid component;

the container filling and sealing step in an aseptic condition (using cold product) is carried out through a filling station leaving no chance for contamination, it being completely isolated and kept under an overpressure provided by sterile air generated by the system 19; and

by employing a heat treatment station, 10, the method can be made continuous, brought to a high degree of automation, and better adjusted and controlled while cutting down its operating costs.

**Claims**

1. A method for producing industrially sauces packaged in sealed containers, ready for consumption, including the step of providing a pumpable sauce from pre-selected ingredients, and characterized in that it comprises the steps of:

supplying a continuous stream of said sauce as a thin layer to a heat treatment station;

heat sterilizing said sauce through said station;

cooling the thus sterilized sauce and successively transporting it to an aseptic packaging station;

supplying said packaging station with a plurality of pre-sterilized containers and, independently of said containers, with a like plurality of closure caps, also in a sterilized condition; and

cold packaging and sealing the sauce inside the containers through said aseptic packaging station.

2. A method according to Claim 1, characterized in that said heat sterilization step is carried out at a temperature in the 115°C to 121°C range for a time period varying between two and four minutes.

3. A method according to Claim 1, characterized in that on exiting the heat treatment station the sauce has a temperature within the range of 30°C to 35°C.

4. A method according to Claim 1, characterized in that during the heat sterilization step said thin layer is controlled to have a thickness dimension within the range of about 8 mm to about 20 mm.

5. A method according to Claim 1, characterized in that the sauce is supplied to the heat treatment station by means of a large diameter piston reciprocating pump.

6. A method according to Claim 1, characterized in that said containers are glass jars.

0300978

AIR →

$H_2O_2$

Fig-1

Fig-2

Fig-3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 171 735 (MARLEN RESEARCH)<br>* Page 12, line 1 - page 13, line 4; figures 1,3 *<br>--- | 1-3,5,6 | B 65 B 55/02<br>A 23 L 3/22 |
| Y | FR-A-2 180 707 (HAMBA)<br>* Page 5, lines 12-28; figures *<br>--- | 1-3,5,6 | |
| Y | US-A-3 232 770 (W. SCHACK)<br>* Column 1, lines 16-20; column 13, line 55 - column 14, line 4; figures 1-3 * | 6 | |
| A | | 2 | |
| A | US-A-4 181 072 (FMC)<br>* Column 5, lines 32-58; claim 1 *<br>----- | 1,2 | |

TECHNICAL FIELDS SEARCHED (Int. Cl.4)

B 65 B
A 23 L

The present search report has been drawn up for all claims

| Place of search | Date of completion of the search | Examiner |
|---|---|---|
| THE HAGUE | 13-10-1988 | JAGUSIAK A.H.G. |